# EUROPÄISCHE PATENTSCHRIFT

(11) **EP 3 063 462 B1**
(45) Veröffentlichungstag und Bekanntmachung des Hinweises auf die Patenterteilung: **02.08.2017**
(21) Anmeldenummer: 14805777.1
(22) Anmeldetag: 15.10.2014
(51) Int. Cl.: F21S 8/10, F21V 8/00, F21V 5/00, F21V 17/16

(54) **BELEUCHTUNGSVORRICHTUNG MIT EINER HALTERUNGSVORRICHTUNG FÜR EINEN OPTIKKÖRPER FÜR EINEN KRAFTFAHRZEUGSCHEINWERFER**
LIGHTING DEVICE HAVING A SECURING DEVICE FOR AN OPTICAL BODY FOR A MOTOR VEHICLE HEADLIGHT
DISPOSITIOF D'ÉCLAIRAGE COMPRENANT UN DISPOSITIF DE RETENUE POUR CORPS OPTIQUE D'UN PROJECTEUR DE VÉHICULE AUTOMOBILE

(30) Priorität: 28.10.2013 AT 507022013
(43) Veröffentlichungstag der Anmeldung: 07.09.2016
(73) Patentinhaber: ZKW Group GmbH, 3250 Wieselburg (AT)
(72) Erfinder: MAIER, Udo, A-3130 Herzogenburg (AT); REITEGGER, Oliver, A-8962 Gröbming (AT); TAUDT, Lukas, A-3325 Ferschnitz (AT)
(74) Vertreter: Patentanwaltskanzlei Matschnig & Forsthuber OG
(86) Internationale Anmeldenummer: PCT/AT2014/050248
(87) Internationale Veröffentlichungsnummer: WO 2015/061819

(56) Entgegenhaltungen:
- EP-A1- 1 396 753
- EP-A1- 2 085 680
- WO-A1-2013/020155
- DE-A1-102007 038 786
- US-A1- 2008 253 144
- US-A1- 2009 016 074
- US-A1- 2012 147 608

## Beschreibung

Weiters betrifft die Erfindung eine Beleuchtungsvorrichtung für einen Kraftfahrzeugscheinwerfer, welches zumindest einen Optikkörper umfasst, welcher zumindest eine Anzahl von nebeneinander angeordneten Vorsatzoptiken aufweist, wobei jede Vorsatzoptik aus einem lichtleitenden Material gebildet ist und jede Vorsatzoptik eine Lichteinkoppelfläche und eine Lichtauskoppelfläche aufweist, wobei die Vorsatzoptiken mit zumindest einem quer zu den Vorsatzoptiken verlaufenden Verbindungssteg im Bereich der Lichtauskoppelflächen mechanisch miteinander verbunden sind, wobei der zumindest eine Verbindungssteg zumindest bereichsweise optisch unwirksam ist.

Außerdem betrifft die Erfindung noch einen Kraftfahrzeugscheinwerfer mit einem oder mehreren solchen Beleuchtungsvorrichtungen. Insbesondere betrifft die Erfindung einen solchen Kraftfahrzeugscheinwerfer zur Erzeugung einer dynamischen Lichtverteilung.

Eingangs genannte Optikkörper werden in Lichtmodulen für Kraftfahrzeugscheinwerfer zur Erzeugung von Lichtverteilungen, beispielsweise zur Erzeugung von segmentierten Lichtverteilungen, d.h. von Lichtverteilungen, welche aus einzelnen Lichtsegmenten aufgebaut sind, verwendet. Die Vorsatzoptiken sind in der Regel aus Kunststoff, Silikon, Glas etc. gefertigt. Um den lichttechnischen Anforderungen, d.h. insbesondere den gesetzlichen Vorgaben und den Vorgaben der Automobilhersteller zu genügen und andererseits den mechanischen Beanspruchungen möglichst lange, vorzugsweise über die Lebensdauer des Fahrzeuges standzuhalten, ist es notwendig, dass die Optikkörper genau und in dieser gewünschten Position stabil fixiert werden.

Zur Befestigung ist es bekannt, Silikonoptikkörper und Kunststoffhalterung in einem ZweiKomponenten-Spritzgießverfahren herzustellen. Durch das Aufschmelzen des Kunststoffhalters auf die Optikkörper kommt es dabei aber zu einem teilweisen Verlust der total reflektierenden Eigenschaften des Optikkörpers (d.h. der Vorsatzoptiken des Optikkörpers).

Die Druckschrift WP 2013/020155 A1 offenbart ein bekanntes LED-Lichtquellenmodul für einen Kraftfahrzeug mit Vorsatzoptiken und einer Halterungsvorrichtung.

Es ist eine Aufgabe der Erfindung, eine Halterungsvorrichtung für einen Optikkörper zu schaffen, mit welcher diese Probleme beseitigt werden und eine einfache, kostengünstige, stabile und positionsgenaue Fixierung von Vorsatzoptiken zu erlauben.

Dies Aufgabe wird mit einer Beleuchtungsvorrichtung nach Anspruch 1 gelöst.

Diese Beleuchtungsvorrichtung weist eine Haltevorrichtung auf, wobei die Halterungsvorrichtung
*) einen Grundkörper umfasst, welcher mit einem Träger für eine oder mehrere Lichtquellen zur Einspeisung von Licht in den Optikkörper verbindbar ist, wobei der Grundkörper zumindest eine Aufnahme für die Vorsatzoptiken aufweist, und wobei der Grundkörper weiters zumindest einen Anschlagbereich aufweist, an welchem der Optikkörper bei einem Einsetzen der Vorsatzoptiken in die zumindest eine Aufnahme mit einer rückwärtigen Fläche des zumindest einen Verbindungssteges zur Anlage bringbar ist, und wobei weiters die Halterungsvorrichtung
*) einen Haltekörper aufweist, welcher nach einem Einbringen des Optikkörpers in den Grundkörper in Einbringrichtung des Optikkörpers auf den Grundkörper aufbringbar ist, wobei eine Befestigungsvorrichtung vorgesehen ist, mittels welcher der Haltekörper an dem Grundkörper fixierbar ist,
   und wobei
*) der Haltekörper zumindest eine, vorzugsweise genau eine Öffnung aufweist, sodass Licht aus den Lichtauskoppelflächen der Vorsatzoptiken ungehindert austreten kann, und wobei
*) der Haltekörper Klemmelemente aufweist, welche in befestigtem Zustand des Haltekörpers an dem Grundkörper an dem zumindest einen Verbindungssteg an dessen vorderseitiger Fläche zur Anlage kommen, und/ oder
*) der Haltekörper Klemmelemente aufweist, welche in befestigtem Zustand des Haltekörpers an dem Grundkörper an einer oder mehrerer Lichtauskoppelflächen und/ oder in einem Bereich von einer oder mehreren Lichtauskoppelflächen der einen oder mehreren Vorsatzoptiken zur Anlage kommen,
und die Klemmelemente den Optikkörper gegen den zumindest einen Anschlagbereich des Grundkörpers drücken.

Mit der erfindungsgemäßen Haltevorrichtung kann der Optikkörper nach dem Einsetzen in den Grundkörper mit dem Haltekörper stabil in Position gehalten werden. Der Optikkörper wird dabei von seiner Vorderseite her von dem Haltekörper gegen den Grundkörper gedrückt, sodass in bzw. entgegen der Lichtaustrittsrichtung der Optikkörper gegen ein Verschieben gesichert ist. Durch geeignete Wahl der Angriffspunkte der Klemmelemente an dem Optikkörper an optisch unwirksamen Bereichen wird außerdem die optische Funktion des Optikkörpers und somit des Lichtmoduls nicht beeinträchtigt.

Zweckmäßiger Weise sind dabei die Klemmelemente elastisch, insbesondere federelastisch ausgebildet.

Bei einer konkreten Ausführungsform der Erfindung ist vorgesehen, dass der zumindest eine Anschlagbereich und Klemmelemente an Bereichen der rückseitigen bzw. vorderseitigen Fläche(n) des zumindest einen Verbindungssteges, welche einen optisch unwirksamen Bereich des zumindest einen Verbindungssteges begrenzen, anliegen.

Vorzugsweise ist dabei vorgesehen, dass der gesamte zumindest eine Verbindungssteg optisch unwirksam ist.

Grundsätzlich können der Verbindungssteg und die Vorsatzoptiken aus unterschiedlichen Materialien gefertigt sein, sodass der oder die Verbindungsstege aus einem optisch unwirksamen, z.B. aus einem nicht transparenten Material gefertigt sind und somit nicht zur optische Funktion des Optikkörpers beitragen. Üblicherweise werden aber Verbindungssteg(e) und Vorsatzoptiken aus einem Material gefertigt, in der Regel sogar einstückig (siehe dazu aber die Erörterungen weiter unten), sodass auch der oder die Verbindungsstege aus einem licht leitenden Material bestehen. Durch geeignete Wahl der Position eines Verbindungsstege, beispielsweise dadurch, dass dieser ausreichenden Abstand zu den Lichtaustrittsflächen der Vorsatzoptiken aufweist, kann erreicht werden, dass nur wenig oder kein Licht in den Verbindungssteg gelangt oder nur in einen unmittelbar an die Lichtauskoppelfläche(n) angrenzenden Bereich, sodass aus dem Verbindungssteg kein Licht (bzw. nur in einer nicht relevanten Menge) austritt oder nur aus einem kleinen Bereich austritt, sodass der Verbindungssteg vollständig oder großteils optisch unwirksam ist, d.h. zur Lichtverteilung also nicht beiträgt und auch keine negativen optische Effekte wie etwa Streulicht erzeugt.

Bei einer Ausführungsform ist vorgesehen, dass zwei Verbindungsstege, einer - in Einbaulage - vorzugsweise in einem oberen und einer in einem unteren Bereich des Optikelementes, vorgesehen sind.

Zwei Verbindungsstege erlauben entweder Fertigung eines besonders stabilen Optikkörpers, bzw. kann der Optikkörper auf zwei Bauteile aufgeteilt werden, sodass sich dieser wesentlich einfacher fertigen lässt.

Um zuverlässig sicherstellen zu können, dass der oder die Verbindungsstege lediglich in einem optisch unwirksamen Bereich berührt werden, ist vorteilhafter Weise vorgesehen, dass Klemmelemente, welche in befestigtem Zustand des Haltekörpers an dem Grundkörper an dem zumindest einen Verbindungssteg an dessen vorderseitiger Fläche zur Anlage kommen, in zumindest einem in Hinblick auf eine Längserstreckung des Verbindungssteges äußeren Bereich, vorzugsweise in beiden äußeren Bereichen zur Anlage kommen.

Die "Längserstreckung" verläuft in Einbaulage dabei typischerweise quer, d.h. in horizontaler Richtung.

Insbesondere ist dabei vorgesehen, dass bei zwei Verbindungsstegen an jedem äußeren Bereich eines Verbindungssteges ein Klemmelement zur Anlage kommt.

Bei einer typischen Anwendung ist vorgesehen, dass die Lichtauskoppelflächen benachbarter Vorsatzoptiken einen Abstand a > 0 zueinander aufweisen.

Aus fertigungstechnischen Gründen kann es besonders von Vorteil sein, wenn - wie oben schon kur angesprochen - das Optikelement aus zumindest zwei voneinander getrennten Optik-Bauteilen besteht, wobei jeder Optik-Bauteil zumindest einen Lichtleitkörper umfasst. Besonders bevorzugt ist es, wenn das Optikelement aus genau zwei Optik-Bauteilen besteht. Dabei kann insbesondere vorgesehen sein, dass zumindest ein, vorzugsweise alle Optik-Bauteile zwei oder mehr Lichtleitkörper umfassen.

Weiters ist es günstig, wenn jene Klemmelemente, welche in befestigtem Zustand des Haltekörpers an dem Grundkörper an einer Lichtauskoppelfläche zur Anlage kommen, in einem an einen Quersteg angrenzenden Bereich der Lichtauskoppelfläche zur Anlage kommen. Erfindungsgemäß weisen ein oder mehrere Vorsatzoptiken Stege auf, welche die Lichtauskoppelflächen der einen oder mehreren Vorsatzoptiken verlängern. Vorzugsweise ist dabei vorgesehen, dass jede Vorsatzoptik zumindest einen Steg aufweist, welcher Steg die Vorsatzoptik mit dem zumindest einen zugeordneten Verbindungssteg verbindet.

Vorzugsweise weist jede Vorsatzoptik zumindest einen Steg auf, welcher Steg an einem von dem die Vorsatzoptik mit anderen Vorsatzoptiken verbindenden Verbindungssteg abgewandten Bereich der Lichtauskoppelfläche anordnet ist.

Dies erlaubt es insbesondere bei zwei- oder mehrteiligen Optikkörpern, dass die einzelnen Bauteile des Optikkörpers gleichmäßig und stabil gehalten werden, da die einzelnen Bauteile, welche den Optikkörper "bilden", dann in einander abgewandten Bereichen gehalten werden.

Ein zwei- oder mehrteiliger Optikkörper ist dabei hinsichtlich seiner Funktion als "ein" Optikkörper zu verstehen, der eine definierte Lichtverteilung erzeugt. Tatsächlich besteht ein solcher Optikkörper aber aus zwei oder mehr Teilen, die durch die Haltevorrichtung in zueinander fixen, definierten Positionen angeordnet sind, sodass sie die Funktion "eins" Optikkörpers realisieren.

Weiters kann es zweckmäßig sein, wenn jene Klemmelemente, welche in befestigtem Zustand des Haltekörpers an dem Grundkörper in einem Bereich von einer oder mehreren Lichtauskoppelflächen der einen oder mehreren Vorsatzoptik zur Anlage kommen, an einem die Lichtauskoppelfläche einer Vorsatzoptik verlängernden Steg zur Anlage kommen.

Diese Stege können bereits zumindest teilweise optisch unwirksam sein, sodass sich diese Stege gut zur Anlage der Klemmelemente eignen.

Insbesondere ist es in diesem Zusammenhang von Vorteil, wenn die Klemmelemente in einem Bereich des Steges, welcher von der zugehörigen Lichtauskoppelfläche abgewandt ist, zur Anlage kommen. Weiter entfernte Bereiche des Steges sind zuverlässig optisch unwirksam, weshalb ein Anliegen von Klemmelementen dort unkritisch ist.

Besonders von Vorteil ist es, wenn die Klemmelemente an Stegen zur Anlage kommen, welche Stege ein offenes Ende der Vorsatzoptik bilden. Die Klemmelemente kommen somit an jenen Stegen zur Anlage, welche nicht in einen Verbindungssteg übergehen, d.h. bei zwei- oder mehrteiligen Optikkörpern an den freien Enden.

Schließlich ist noch vorgesehen, dass die Befestigungsvorrichtung Rastelemente und korrespondierende Rastausnehmungen umfasst, wobei Rastelemente an dem Haltekörper und/oder dem Grundkörper und korrespondierende Rastausnehmungen an dem Grundkörper und/oder dem Haltekörper angeordnet sind. Auf diese Weise können Grundkörper und Haltekörper stabil miteinander befestigt werden, sodass auch die Vorsatzoptik stabil in der gewünschten Position gehalten ist.

Bei einer bevorzugten Ausführungsform der Erfindung ist außerdem noch vorgesehen, dass der Grundkörper für jede Vorsatzoptik) zumindest eine Aufnahme aufweist. Diese Aufnahmen liegen in einem vorderen Bereich und schließen in etwas plan mit den Lichtauskoppelflächen ab. Unter Umständen kann auch vorgesehen sein, dass jeweils noch eine oder mehrere weiteren Aufnahmen in einem hinteren Bereich für jede Vorsatzoptik vorgesehen sind, um einen noch stabileren Halt zu erzeugen.

Der Optikkörper bzw. die den Optikkörper bildenden, voneinander getrennten Bauteile werden von dem Halteelement gegen den Grundkörper gedrückt, sodass ein Bewegen in oder entgegen der Lichtaustrittsrichtung nicht mehr möglich ist. Der Anpressdruck kann dabei ausreichend hoch sein, dass auch ein seitliches (horizontal, normal zur Lichtaustrittsrichtung) und ein vertikales Verschieben verhindert ist.

Falls der Anpressdruck nicht ausreichend groß ist, oder zur zusätzlichen Absicherung gegen ein seitliches und/oder vertikales Verschieben des Optikkörpers kann außerdem noch vorgesehen sein, dass die Aufnahmen in Einbaulage zu einer oder vorzugsweise zu beiden Seiten und/oder nach oben und/oder nach unten einen Anschlag für die Vorsatzoptiken bilden.

Alternativ oder zusätzlich kann in diesem Zusammenhang auch noch vorgesehen sein, dass der zumindest eine Anschlagbereich des Grundkörpers an einer oder vorzugsweise beiden Seiten und/oder in einem oberen und/oder in einem unteren Bereich von jeweils einer in Lichtaustrittsrichtung über den zumindest einen Anschlagbereich überstehenden Begrenzungswand begrenzt ist.

Diese Begrenzungswände, welche den oder die Anschlagbereiche einfassen, dienen als Anschlag für den Optikkörper nach oben und unten. Auch eine Funktion als Anschlagbereich seitlich ist möglich.

Üblicherweise wird allerdings ein seitliches Verschieben durch die Aufnahmen für die Vorsatzoptiken verhindert.

Im Folgenden ist die Erfindung an Hand der Zeichnung näher erörtert. In dieser zeigt
Fig. 1 eine perspektivische Ansicht eines Optikkörpers, welcher mit einer erfindungsgemäßen Halterungsvorrichtung in Bezug auf einen Träger für Lichtquellen befestigt ist,
Fig. 2 die Anordnung aus Figur 1, betrachtet aus einer anderen Perspektive, in einer Explosionsdarstellung,
Fig. 3 die Anordnung aus Figur 1 in einer Ansicht von Vorne, entgegen der Lichtaustrittsrichtung,
Fig. 4 einen Schnitt entlang der Linie A-A aus Figur 3,
Fig. 5 einen beispielhaften Optikkörper, wie er bei der gezeigten Ausführungsform zum Einsatz kommt, in einer perspektivischen Ansicht von schräg hinten,
Fig. 6 eine perspektivische Ansicht einer Anordnung aus Figur 1, mit Blick auf den Grundkörper bei herausgenommenem Optikkörper,
Fig. 7 einen Haltekörper zum Fixieren des Optikkörpers an dem Grundkörper in einer Ansicht von Vorne, und
Fig. 8 den Optikkörper aus Figur 5 in einer Ansicht von Vorne.

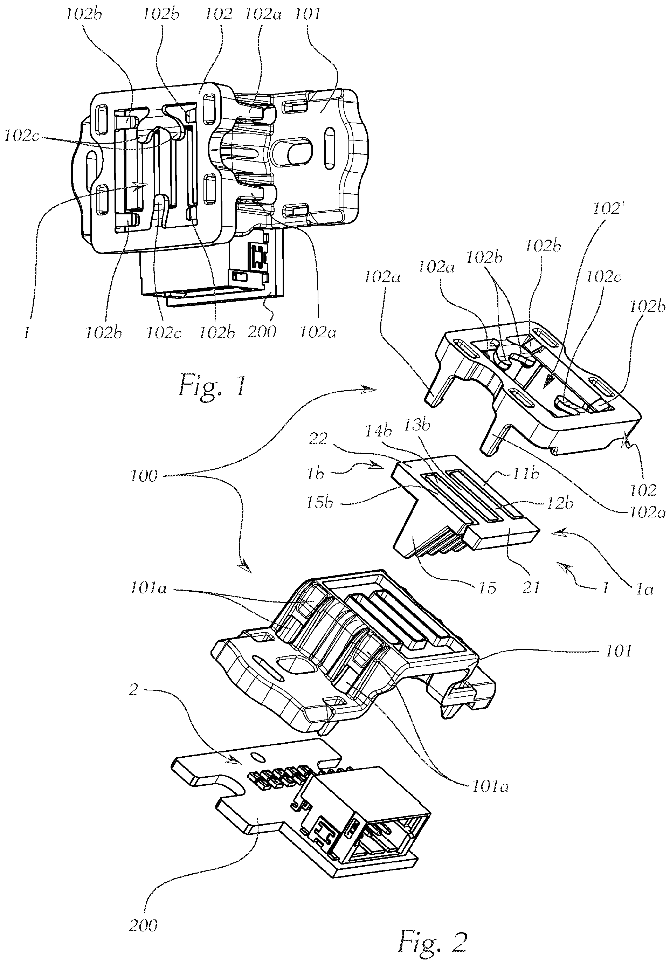

Figur 1 zeigt in zusammengebautem Zustand und Figur 2 in einer Explosionsdarstellung eine Halterungsvorrichtung 100 für einen Optikkörper 1 für einen Kraftfahrzeugscheinwerfer bzw. für ein Lichtmodul für einen Kraftfahrzeugscheinwerfer.

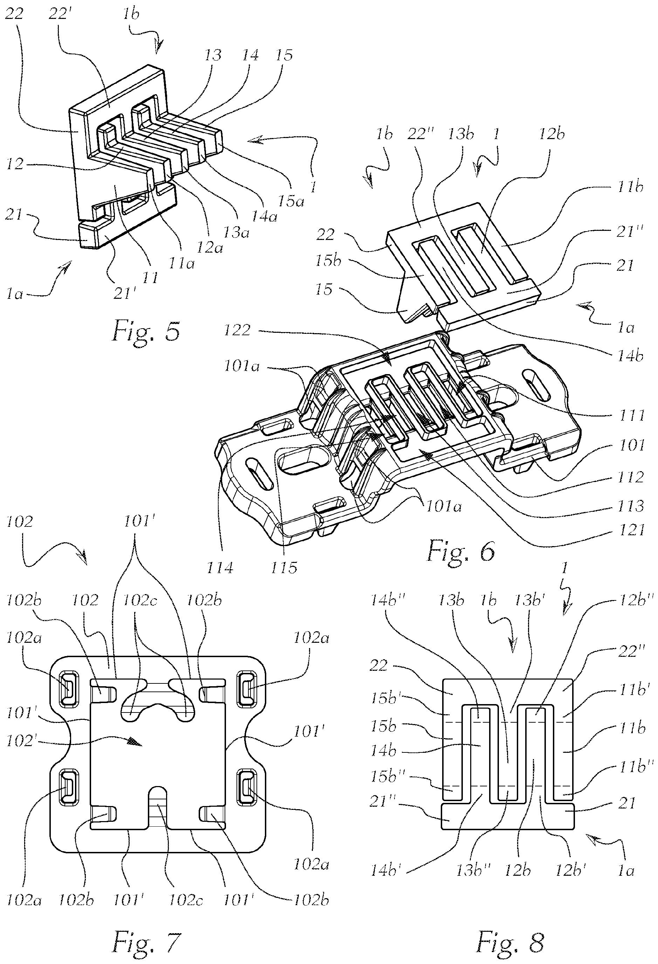

Der Optikkörper 1, der insbesondere in den Figuren 2, 5, 6 und 8 gut zu erkennen ist, umfasst eine Anzahl von seitlich nebeneinander angeordneten Vorsatzoptiken 11, 12, 13, 14, 15, wobei jede Vorsatzoptik 11 - 15 aus einem lichtleitenden Material gebildet ist und jede Vorsatzoptik 11 - 15 eine Lichteinkoppelfläche 11a - 15a (Figur 5) und eine Lichtauskoppelfläche 11b - 15b aufweist.

Die Lichtauskoppelflächen 11b - 15b benachbarter Vorsatzoptiken 11 -15 weisen dabei einen Abstand a > 0 zueinander auf, in der Regel sind, wie dargestellt, benachbarte Vorsatzoptiken über ihre gesamte Ausdehnung zueinander beabstandet und nicht nur im Bereich der Lichtauskoppelflächen, um ein Übersprechen von Licht aus einer Vorsatzoptik in eine benachbarte Vorsatzoptik zu verhindern.

Dieser Optikkörper 1 wird, wie in Figur 2 zu erkennen, an einem Träger 200 für Lichtquellen 2 befestigt, wobei ein oder mehreren Lichtquellen jeweils in eine Vorsatzoptik Licht einspeisen, welches über die Lichtauskoppelflächen 11b - 15b austritt und, gegebenenfalls von einer nachgeschalteten, nicht dargestellten Projektionsoptik, in Form einer segmentierten Lichtverteilung in einen Bereich vor einem Fahrzeug, in welches der Optikkörper eingebaut ist, projiziert wird. Eine Gesamtlichtverteilung wird mittels mehrerer Optikkörper erzeugt, welche Bestandteil eines oder mehrerer Lichtmodule bzw. eines Fahrzeugscheinwerfers sind. Auf Details soll an dieser Stelle verzichtet werden, da eine derartige Erzeugung einer Gesamtlichtverteilung für den Fachmann bekannter Stand der Technik ist.

Die Vorsatzoptiken 11 - 15 sind mit zwei quer zu den Vorsatzoptiken 11 - 15 verlaufenden Verbindungsstegen 21, 22 im Bereich der Lichtauskoppelflächen 11b - 15b mechanisch miteinander verbunden. Diese Verbindungsstege 21, 22 sind dabei zumindest bereichsweise optisch unwirksam.

Die Verbindungsstege 21, 22 befinden dabei in Einbaulage des Optikkörpers (d.h. des Lichtmoduls bzw. Scheinwerfers, welcher den betrachteten Optikkörper enthält) in einem oberen und einer in einem unteren Bereich des Optikelementes 1.

Der Optikkörper bzw. das Optikelement 1 kann aus einem Stück gefertigt sein. Aus fertigungstechnischen Gründen kann es aber besonders von Vorteil sein, wenn der Optikkörper 1 wie gezeigt aus zwei voneinander getrennten Optik-Bauteilen 1a, 1b besteht, wobei jeder Optik-Bauteil 1a, 1b zwei oder mehrere Vorsatzoptiken 11, 13, 15; 12, 14 (im konkreten Beispiel zwei und drei Vorsatzoptiken) umfasst.

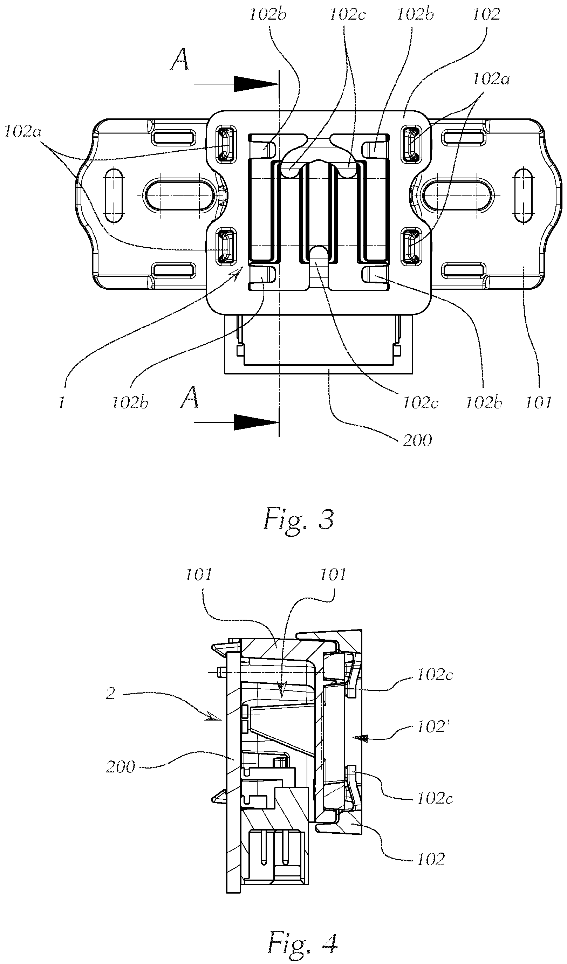

Bei dem gezeigten zweiteiligen Optikkörper weisen außerdem die Vorsatzoptiken 11 - 15 Stege 11b', 12b', 13b', 14b', 15b', 11b", 12b", 13b", 14b", 15b" auf, welche die Lichtauskoppelflächen 11b - 15b der Vorsatzoptiken 11 - 15 verlängern. (Die Abgrenzung der Stege 11b', ... , 15b" zu den Lichtauskoppelflächen 11b - 15b ist in Figuren 3 und 8 durch eine strichpunktierte Linie dargestellt.)

Jede Vorsatzoptik 11, 12, 13, 14, 15 weist dabei einen Steg 11b', 12b', 13b', 14b', 15b' auf, welcher Steg 11b', 12b', 13b', 14b', 15b' die Vorsatzoptik 11 - 15 mit dem einen der Vorsatzoptik zugeordneten Verbindungssteg 21, 22 verbindet.

Außerdem weist jede Vorsatzoptik einen Steg 11b", 12b", 13b", 14b", 15b" auf, welcher Steg 11b", 12b", 13b", 14b", 15b" an einem von dem die Vorsatzoptik 11 - 15 mit anderen Vorsatzoptiken 11 - 15 verbindenden Verbindungssteg 21, 22 abgewandten Bereich der Lichtauskoppelfläche 11b, 12b, 13b, 14b, 15b anordnet ist.

Zur Befestigung dieses Optikkörpers 1 an dem Träger ist erfindungsgemäß eine Halterungsvorrichtung 100 vorgesehen, welche einen Grundkörper 101 umfasst, welcher mit dem Träger 200 verbindbar ist. Dabei weist der gezeigte Grundkörper 101 wie schon beschrieben Aufnahme 111, 112, 113, 114, 115 für die Vorsatzoptiken 11 - 15 des Optikkörpers 1 auf, und insbesondere weist der Grundkörper 101 weiters zwei Anschlagbereiche 121, 122 auf, an welchen der Optikkörper 1 bei einem Einsetzen der Vorsatzoptiken 11 - 15 in die Aufnahmen 111, 112, 113, 114, 115 mit rückwärtigen Flächen 21', 22' der Verbindungsstege 21, 22 zur Anlage bringbar ist. Die Anschlagbereiche 121, 122, die in ihrer Form und Abmessungen an die Verbindungsstege 21, 22 angepasst sind, sind in Figur 2 und Figur 6 gut zu erkennen.

Die Halterungsvorrichtung 100 weist einen Haltekörper 102 auf, welcher nach einem Einbringen des Optikkörpers 1 in den Grundkörper 101 in Einbringrichtung des Optikkörpers 1 (d.h. im Wesentlichen entgegen der Lichtaustrittsrichtung) auf den Grundkörper 101 aufbringbar ist. Weiters ist eine Befestigungsvorrichtung 101a, 102a vorgesehen, mittels welcher der Haltekörper 102 an dem Grundkörper 101 fixierbar ist.

In dem gezeigten Beispiel umfasst die Befestigungsvorrichtung Rastelemente 102a und korrespondierende Rastausnehmungen 101a, wobei die Rastelemente 102a an dem Haltekörper 102 und die korrespondierenden Rastausnehmungen 101a an dem Grundkörper 101 angeordnet sind. Auf diese Weise können Grundkörper und Haltekörper stabil miteinander verbunden werden, sodass auch die Vorsatzoptik stabil in der gewünschten Position gehalten ist.

Wie Figur 2 und Figur 7 zu entnehmen ist, verfügt dabei der Haltekörper 102 über eine Öffnung 102', sodass Licht aus den Lichtauskoppelflächen 11b - 15b der Vorsatzoptiken 11 - 15 ungehindert austreten kann.

Der Haltekörper 102 weist nun Klemmelemente 102b auf, welche in befestigtem Zustand (Figur 1, Figur 3, Figur 4; Figur 7 zeigt lediglich den Haltekörper in einer Ansicht von Vorne) des Haltekörpers 102 an dem Grundkörper 101 an den Verbindungsstegen 21, 22 an deren vorderseitigern Flächen 21", 22" zur Anlage kommen.

Weiters ist vorgesehen, dass der Haltekörper 102 Klemmelemente 102c aufweist, welche in befestigtem Zustand des Haltekörpers 102 an dem Grundkörper 101 an einer oder mehrerer Lichtauskoppelflächen bzw. vorzugsweise, wie gezeigt, in einem Bereich der Lichtauskoppelflächen 11b - 15b der Vorsatzoptiken 11 - 15 zur Anlage kommen.

Bei den "Bereichen" 12b", 14b", 13b" der Lichtauskoppelflächen handelt es sich in dem gezeigten Beispiel um manche der oben beschriebenen Stege, welche die Lichtauskoppelflächen verlängern. Vorzugsweise handelt es sich dabei um die freien Stege, welche nicht mit einem Verbindungssteg verbunden sind.

Die Klemmelemente 102b, 102c drücken den Optikkörper 1 gegen die Anschlagbereiche 121, 122 des Grundkörpers 101, wozu die Klemmelemente 102b, 102c vorzugsweise elastisch, insbesondere federelastisch ausgebildet sind.

Die Anschlagbereiche 121, 122 und die Klemmelemente 102b liegen dabei an Bereichen der rückseitigen 21', 22' bzw. vorderseitigen Flächen 21", 22" der Verbindungsstege 21, 22, welche einen optisch unwirksamen Bereich, d.h. ein optisch unwirksames Volumen des jeweiligen Verbindungssteges 21, 22 begrenzen, an.

Vorzugsweise sind dabei die Verbindungssteg 21, 22 in ihrer Gesamtheit optisch unwirksam.

Grundsätzlich können der Verbindungssteg und die Vorsatzoptiken aus unterschiedlichen Materialien gefertigt sein, sodass der oder die Verbindungsstege aus einem optisch unwirksamen, z.B. aus einem nicht transparenten Material gefertigt sind und somit nicht zur optische Funktion des Optikkörpers beitragen. Üblicherweise werden aber Verbindungssteg(e) und Vorsatzoptiken aus einem Material gefertigt, in der Regel sogar einstückig (siehe dazu aber die Erörterungen weiter unten), sodass auch der oder die Verbindungsstege aus einem licht leitenden Material bestehen. Durch geeignete Wahl der Position eines Verbindungsstege, beispielsweise dadurch, dass dieser ausreichenden Abstand zu den Lichtaustrittsflächen der Vorsatzoptiken aufweist, kann erreicht werden, dass nur wenig oder kein Licht in den Verbindungssteg gelangt oder nur in einen unmittelbar an die Lichtauskoppelfläche(n) angrenzenden Bereich, sodass aus dem Verbindungssteg kein Licht (bzw. nur in einer nicht relevanten Menge) austritt oder nur aus einem kleinen Bereich austritt, sodass der Verbindungssteg vollständig oder großteils optisch unwirksam ist, d.h. zur Lichtverteilung also nicht beiträgt und auch keine negativen optische Effekte wie etwa Streulicht erzeugt.

Um einerseits zuverlässig sicherstellen zu können, dass die Verbindungsstege lediglich in einem optisch unwirksamen Bereich berührt werden, andererseits, um eine möglichst großflächige und gleichmäßige Anpressung der Teile des Optikkörpers an den Grundkörper zu ermöglichen, ist in vorteilhafter Weise vorgesehen, dass die Klemmelemente 102b, welche in befestigtem Zustand des Haltekörpers 102 an dem Grundkörper 101 an den Verbindungsstegen 21, 22 an den vorderseitigen Flächen 21", 22" zur Anlage kommen, in in Hinblick auf eine Längserstreckung der Verbindungsstege 21, 22 äußeren Bereichen, vorzugsweise in beiden äußeren Bereichen zur Anlage kommen, wie dies in Figur 1, 3 und 7 gut zu erkennen ist.

Die "Längserstreckung" verläuft in Einbaulage dabei typischerweise quer, d.h. in horizontaler Richtung.

Stellt man sich den Optikkörper in einer Draufsicht als ein Viereck vor, so ist somit jedes Eck mit einem Klemmelement 102b belegt.

Jene Klemmelemente 102c, welche den Optikkörper nicht im Bereich der Querstege sondern im Bereich der Lichtauskoppelflächen 11b - 15b berühren, kommen an den freien Stegen 13b", 12b", 14b", welche die Lichtauskoppelflächen 13b, 12b, 14b verlängern, und zwar an den mittleren drei Stegen, zur Anlage.

Die Stege dienen einerseits dazu, die Lichtaustrittsflächen der Vorsatzoptiken zu verlängern, um die Lichtverteilung zu verbessern, andererseits teilweise zum Verbinden der Vorsatzoptiken mit den Verbindungsstegen. Die Stege sind daher vor allen unmittelbar an die Vorsatzoptiken anschließend noch optisch wirksam, während sie mit zunehmendem Abstand optisch unwirksam werden, sodass dort Klemmelemente ohne Beeinträchtigung der optischen Funktion zur Anlage kommen können.

Es in diesem Zusammenhang daher insbesondere von Vorteil, wenn die Klemmelemente 102c in einem Bereich des Steges 12b", 13b", 14b", welcher von der zugehörigen Lichtauskoppelfläche 11b - 15b ab- zw. Weg gewandt ist, zur Anlage kommen. Weiter entfernte Bereiche des Steges sind zuverlässig optisch unwirksam, weshalb ein Anliegen von Klemmelementen dort unkritisch ist.

Dies erlaubt es insbesondere bei zwei- oder mehrteiligen Optikkörpern, dass die einzelnen Bauteile des Optikkörpers gleichmäßig und stabil gehalten werden, da die einzelnen Bauteile, welche den Optikkörper "bilden", dann in einander abgewandten Bereichen gehalten werden.

Ein zwei- oder mehrteiliger Optikkörper ist dabei hinsichtlich seiner Funktion als "sein" Optikkörper zu verstehen, der eine definierte Lichtverteilung erzeugt. Tatsächlich besteht ein solcher Optikkörper aber aus zwei oder mehr Teilen, die durch die Haltevorrichtung in zueinander fixen, definierten Positionen angeordnet sind, sodass sie die Funktion "eins" Optikkörpers realisieren.

Wie schon erwähnt, wird der Optikkörper bzw. werden die den Optikkörper bildenden, voneinander getrennten Bauteile von dem Halteelement 102 gegen den Grundkörper 101 gedrückt, sodass ein Bewegen in oder entgegen der Lichtaustrittsrichtung nicht mehr möglich ist. Der Anpressdruck kann dabei ausreichend hoch sein, dass auch ein seitliches (horizontal, normal zur Lichtaustrittsrichtung) und ein vertikales Verschieben verhindert ist.

Falls der Anpressdruck nicht ausreichend groß ist, oder zur zusätzlichen Absicherung gegen ein seitliches und/oder vertikales Verschieben des Optikkörpers kann außerdem noch vorgesehen sein, dass die Aufnahmen 111, 112, 113, 114, 115 in Einbaulage zu einer oder vorzugsweise zu beiden Seiten und/oder nach oben und/oder nach unten einen Anschlag für die Vorsatzoptiken 11 - 15 bilden.

Alternativ oder zusätzlich kann in diesem Zusammenhang auch noch vorgesehen sein, dass die Anschlagbereiche 121, 122 des Grundkörpers 101 von über die Anschlagbereiche 121, 122 überstehenden Begrenzungswänden 101' begrenzt sind.

Diese Begrenzungswände 101', welche die beiden Anschlagbereiche 121, 122 einfassen, können als Anschlag für den Optikkörper 1 nach oben und unten dienen. Auch eine Funktion als Anschlagbereich seitlich ist möglich. Somit ist auch ein seitliches Bewegen in der Ebene der Lichtaustrittsflächen zuverlässig verhindert.

Üblicherweise wird allerdings ein seitliches Verschieben durch die Aufnahmen für die Vorsatzoptiken verhindert.

## Patentansprüche

1. Beleuchtungsvorrichtung in Form eines Lichtmodules für einen Kraftfahrzeugscheinwerfer oder in Form eines Kraftfahrzeugscheinwerfers, welche Beleuchtungsvorrichtung zumindest einen Optikkörper (1) umfasst, welcher zumindest eine Anzahl von nebeneinander angeordneten Vorsatzoptiken (11, 12, 13, 14, 15) aufweist, wobei jede Vorsatzoptik (11 - 15) aus einem lichtleitenden Material gebildet ist und jede Vorsatzoptik (11 - 15) eine Lichteinkoppelfläche (11a - 15a) und eine Lichtauskoppelfläche (11b - 15b) aufweist, wobei die Vorsatzoptiken (11 - 15) mit zumindest einem quer zu den Vorsatzoptiken (11 - 15) verlaufenden Verbindungssteg (21, 22) im Bereich der Lichtauskoppelflächen (11b - 15b) mechanisch miteinander verbunden sind, und wobei eine Halterungsvorrichtung (100) für den zumindest einen Optikkörper (1) vorgesehen ist,
**und wobei**
die Halterungsvorrichtung (100)
*) einen Grundkörper (101) umfasst, welcher mit einem Träger (200) für eine oder mehrere Lichtquellen (2) zur Einspeisung von Licht in den Optikkörper (1) verbindbar ist, wobei der Grundkörper (101) zumindest eine Aufnahme (111, 112, 113, 114, 115) für die Vorsatzoptiken (11 - 15) aufweist, und wobei der Grundkörper (101) weiters zumindest einen Anschlagbereich (121, 122) aufweist, an welchem der Optikkörper (1) bei einem Einsetzen der Vorsatzoptiken (11 -15) in die zumindest eine Aufnahme (111, 112, 113, 114, 115) mit einer rückwärtigen Fläche (21', 22') des zumindest einen Verbindungssteges (21, 22) zur Anlage bringbar ist,
**dadurch gekennzeichnet, dass**
der zumindest eine Verbindungssteg (21, 22) zumindest bereichsweise optisch unwirksam ist, und
die Halterungsvorrichtung (100)
*) einen Haltekörper (102) aufweist, welcher nach einem Einbringen des Optikkörpers (1) in den Grundkörper (101) in Einbringrichtung des Optikkörpers (1) auf den Grundkörper (101) aufbringbar ist,
wobei eine Befestigungsvorrichtung (101a, 102a) vorgesehen ist, mittels welcher der Haltekörper (102) an dem Grundkörper (101) fixierbar ist,
und wobei
*) der Haltekörper (102) zumindest eine, vorzugsweise genau eine Öffnung (102') aufweist, sodass Licht aus den Lichtauskoppelflächen (11b - 15b) der Vorsatzoptiken (11 - 15) ungehindert austreten kann, und wobei
*) der Haltekörper (102) Klemmelemente (102b) aufweist, welche in befestigtem Zustand des Haltekörpers (102) an dem Grundkörper (101) an dem zumindest einen Verbindungssteg (21, 22) an dessen vorderseitiger Fläche (21", 22") zur Anlage kommen, und wobei
*) ein oder mehrere Vorsatzoptiken (11 - 15) Stege (11b" 12b", 13b", 14b", 15b") aufweisen, welche die Lichtauskoppelflächen (11b - 15b) dieser Vorsatzoptiken (11 - 15) verlängern, wobei
jeder Steg (11b" 12b", 13b", 14b", 15b") an einem von dem die jeweilige Vorsatzoptik (11 - 15) mit anderen Vorsatzoptiken (11 - 15) verbindenden Verbindungssteg (21, 22) abgewandten Bereich der Lichtauskoppelfläche (11b, 12b, 13b, 14b, 15b) anordnet ist, und wobei der Haltekörper (102) Klemmelemente (102c) aufweist, welche in befestigtem Zustand des Haltekörpers (102) an dem Grundkörper (101) an dem Steg bzw. an diesen Stegen (11b" 12b", 13b", 14b", 15b") der einen oder mehreren Vorsatzoptiken (11 - 15) zur Anlage kommen,
und die Klemmelemente (102b, 102c) den Optikkörper (1) gegen den zumindest einen Anschlagbereich (121, 122) des Grundkörpers (101) drücken.

2. Beleuchtungsvorrichtung nach Anspruch 1, **dadurch gekennzeichnet, dass** die Klemmelemente (102b, 102c) elastisch, insbesondere federelastisch ausgebildet sind.

3. Beleuchtungsvorrichtung nach Anspruch 1 oder 2, **dadurch gekennzeichnet, dass** der zumindest eine Anschlagbereich (121, 122) und Klemmelemente (102b) an Bereichen der rückseitigen bzw. vorderseitigen Fläche(n) (21', 22') des zumindest einen Verbindungssteges (21, 22), welche einen optisch unwirksamen Bereich des zumindest einen Verbindungssteges (21, 22) begrenzen, anliegen.

4. Beleuchtungsvorrichtung nach einem der Ansprüche 1 bis 3, **dadurch gekennzeichnet, dass** der gesamte zumindest eine Verbindungssteg (21, 22) optisch unwirksam ist.

5. Beleuchtungsvorrichtung nach einem der Ansprüche 1 bis 4, **dadurch gekennzeichnet, dass** zwei Verbindungsstege (21, 22), einer - in Einbaulage - vorzugsweise in einem oberen und einer in einem unteren Bereich des Optikelementes (1), vorgesehen sind.

6. Beleuchtungsvorrichtung nach einem der Ansprüche 3 bis 5, **dadurch gekennzeichnet, dass** Klemmelemente (102b), welche in befestigtem Zustand des Haltekörpers (102) an dem Grundkörper (101) an dem zumindest einen Verbindungssteg (21, 22) an dessen vorderseitiger Fläche (21", 22") zur Anlage kommen, in zumindest einem in Hinblick auf eine Längserstreckung des Verbindungssteges (21, 22) äußeren Bereich, vorzugsweise in beiden äußeren Bereichen zur Anlage kommen.

7. Beleuchtungsvorrichtung nach Anspruch 5 und 6, **dadurch gekennzeichnet, dass** bei zwei Verbindungsstegen an jedem äußeren Bereich eines Verbindungssteges (21, 22) ein Klemmelement (102b) zur Anlage kommt.

8. Beleuchtungsvorrichtung nach einem der Ansprüche 1 bis 7, **dadurch gekennzeichnet, dass** die Lichtauskoppelflächen (11b - 15b) benachbarter Vorsatzoptiken (11 - 15) einen Abstand a > 0 zueinander aufweisen.

9. Beleuchtungsvorrichtung nach einem der Ansprüche 1 bis 8, **dadurch gekennzeichnet, dass** das Optikelement (1) aus zumindest zwei voneinander getrennten Optik-Bauteilen (1a, 1b) besteht, wobei jeder Optik-Bauteil (1a, 1b) zumindest einen Lichtleitkörper (11, 13, 15; 12, 14) umfasst, wobei vorzugsweise das Optikelement (1a, 1b) aus genau zwei Optik-Bauteilen (1a, 1b) besteht.

10. Beleuchtungsvorrichtung nach einem der Ansprüche 1 bis 9, **dadurch gekennzeichnet, dass** zumindest ein, vorzugsweise alle Optik-Bauteile (1a, 1b) zwei oder mehr Lichtleitkörper (11,13,15; 12,14) umfassen.

11. Beleuchtungsvorrichtung nach einem der Ansprüche 1 bis 10, **dadurch gekennzeichnet, dass** jene Klemmelemente (102c), welche in befestigtem Zustand des Haltekörpers (102) an dem Grundkörper (101) an einer Lichtauskoppelfläche (11b - 15b) zur Anlage kommen, in einem an einen Quersteg (21, 22) angrenzenden Bereich der Lichtauskoppelfläche (11b - 15b) zur Anlage kommen.

12. Beleuchtungsvorrichtung nach einem der Ansprüche 1 bis 11, **dadurch gekennzeichnet, dass** jede Vorsatzoptik (11, 12, 13, 14, 15) zumindest einen Steg (11b', 12b', 13b', 14b', 15b') aufweist, welcher Steg (11b', 12b', 13b', 14b', 15b') die Vorsatzoptik (11 - 15) mit dem zumindest einen zugeordneten Verbindungssteg (21, 22) verbindet, wobei vorzugsweise jede Vorsatzoptik zumindest einen Steg (11b", 12b", 13b", 14b", 15b") aufweist, welcher Steg (11b" 12b", 13b", 14b", 15b") an einem von dem die Vorsatzoptik (11 - 15) mit anderen Vorsatzoptiken (11 - 15) verbindenden Verbindungssteg (21, 22) abgewandten Bereich der Lichtauskoppelfläche (11b, 12b, 13b, 14b, 15b) angeordnet ist.

13. Beleuchtungsvorrichtung nach Anspruch 12, **dadurch gekennzeichnet, dass** jene Klemmelemente (102c), welche in befestigtem Zustand des Haltekörpers (102) an dem Grundkörper (101) in einem Bereich von einer oder mehreren Lichtauskoppelflächen (11b - 15b) der einen oder mehreren Vorsatzoptik (11 - 15) zur Anlage kommen, an einem die Lichtauskoppelfläche (11b - 15b) einer Vorsatzoptik (11 - 15) verlängernden Steg (11b', 12b', 13b', 14b', 15b', 11b", 12b", 13b", 14b", 15b") zur Anlage kommen, wobei vorzugsweise die Klemmelemente (102c) in einem Bereich des Steges (11b', 12b', 13b', 14b', 15b', 11b", 12b", 13b", 14b", 15b"), welcher von der zugehörigen Lichtauskoppelfläche (11b - 15b) abgewandt ist, zur Anlage kommen.

14. Beleuchtungsvorrichtung nach Anspruch 13, **dadurch gekennzeichnet, dass** die Klemmelemente (102c) an Stegen (12b", 13b", 14b") zur Anlage kommen, welche Stege (12b", 13b", 14b") ein offenes Ende der Vorsatzoptik (12, 13, 14) bilden.

15. Beleuchtungsvorrichtung nach einem der Ansprüche 1 bis 14, **dadurch gekennzeichnet, dass** die Befestigungsvorrichtung Rastelemente (102a) und korrespondierende Rastausnehmungen (101a) umfasst, wobei Rastelemente (102a) an dem Haltekörper (102) und/oder dem Grundkörper (101) und korrespondierende Rastausnehmungen (101a) an dem Grundkörper (101) und/oder dem Haltekörper (102) angeordnet sind.

16. Beleuchtungsvorrichtung nach einem der Ansprüche 1 bis 15, **dadurch gekennzeichnet, dass** der Grundkörper (101) für jede Vorsatzoptik (11, 12, 13, 14, 15) zumindest eine Aufnahme (111,112,113,114,115) aufweist.

17. Beleuchtungsvorrichtung nach einem der Ansprüche 1 bis 16, **dadurch gekennzeichnet, dass** die Aufnahmen (111, 112, 113, 114, 115) in Einbaulage zu einer oder vorzugsweise zu beiden Seiten und/oder nach oben und/oder nach unten einen Anschlag für die Vorsatzoptiken (11 - 15) bilden.

18. Beleuchtungsvorrichtung nach einem der Ansprüche 1 bis 17 in Form eines Kraftfahrzeugscheinwerfer zur Erzeugung einer dynamischen Lichtverteilung.

## Claims

1. A lighting device in the form of a light module for a motor vehicle headlight or in the form of a motor vehicle headlight, which lighting device comprises at least one optical body (1), which has a number of adjacently arranged ancillary optical systems (11, 12, 13, 14, 15), wherein each ancillary optical system (11-15) is formed from a light-guiding material and each ancillary optical system (11-15) has a light coupling-in face (11a-15a) and a light decoupling face (11b-15b), wherein the ancillary optical systems (11-15) are mechanically interconnected in the region of the light decoupling faces (11b-15b) by at least one connecting web (21, 22) extending transversely to the ancillary optical systems (11-15), and wherein a mounting device (100) for the at least one optical body (1) is provided,
and wherein
the mounting device (100)
*) comprises a main body (101), which can be connected to a support (200) for one or more light sources (2) for feeding light into the optical body (1), wherein the main body (101) has at least one receptacle (111, 112, 113, 114, 115) for the ancillary optical systems (11-15), and wherein the main body (101) also has at least one stop region (121, 122), with which the optical body (1) can be brought into abutment via a rear face (21', 22') of the at least one connecting web (21, 22) when the ancillary optical systems (11-15) are inserted into the at least one receptacle (111,112,113,114,115),
**characterised in that**
the at least one connecting web (21, 22) is optically ineffective, at least in some regions, and the mounting device (100)
*) has a retaining body (102), which, once the optical body (1) has been introduced into the main body (101), can be applied to the main body (101) in the direction of introduction of the optical body (1),
wherein a fastening device (101a, 102a) is provided, by means of which the retaining body (102) can be fixed to the main body (101),
and wherein
*) the retaining body (102) has at least one, preferably precisely one opening (102'), such that light can exit unhindered from the light decoupling faces (11b-15b) of the ancillary optical systems (11-15), and wherein
*) the retaining body (102) has clamping elements (102b) which, when the retaining body (102) is fastened to the main body (101), come to rest against the at least one connecting web (21, 22) on the front face thereof (21", 22"), and wherein
*) one or more ancillary optical systems (11-15) has/have webs (11b", 12b", 13b", 14b", 15b"), which extend the light decoupling faces (11b-15b) of these ancillary optical systems (11-15), wherein
each web (11b", 12b", 13b", 14b", 15b") is arranged in a region of the light decoupling face (11b, 12b, 13b, 14b, 15b) facing away from the connecting web (21, 22) connecting the ancillary optical system (11-15) in question to other ancillary optical systems (11-15), and wherein the retaining body (102) has clamping elements (102c) which, when the retaining body (102) is fastened to the main body (101), come to rest against the web or these webs (11b", 12b", 13b", 14b", 15b") of the one or more ancillary optical systems (11-15),
and the clamping elements (102b, 102c) press the optical body (1) against the at least one stop region (121,122) of the main body (101).

2. The lighting device according to Claim 1, **characterised in that** the clamping elements (102b, 102c) are resilient, in particular spring-loaded.

3. The lighting device according to Claim 1 or 2, **characterised in that** the at least one stop region (121, 122) and clamping elements (102b) rest against regions of the rear and front face(s) (21', 22'), respectively, of the at least one connecting web (21, 22) that delimit an optically ineffective region of the at least one connecting web (21, 22).

4. The lighting device according to one of Claims 1 to 3, **characterised in that** the entire at least one connecting web (21, 22) is optically ineffective.

5. The lighting device according to one of Claims 1 to 4, **characterised in that** two connecting webs (21, 22) are provided, preferably one in an upper and one in a lower region of the optical element (1) in the installed position.

6. The lighting device according to one of Claims 3 to 5, **characterised in that** clamping elements (102b) which, when the retaining body (102) is fastened to the main body (101), come to rest against the at least one connecting web (21, 22) on the front face (21", 22") thereof come to rest in at least one outer region with respect to a longitudinal extension of the connecting web (21, 22), preferably in both outer regions.

7. The lighting device according to Claim 5 and 6, **characterised in that**, in the case of two connecting webs, a clamping element (102b) comes to rest against each outer region of a connecting web (21, 22).

8. The lighting device according to one of Claims 1 to 7, **characterised in that** the light decoupling faces (11b-15b) of adjacent ancillary optical systems (11-15) are arranged at a distance a > 0 from one another.

9. The lighting device according to one of Claims 1 to 8, **characterised in that** the optical element (1) consists of at least two separate optical components (1a,1b), wherein each optical component (1a, 1b) comprises at least one light-guiding body (11, 13, 15; 12, 14), wherein preferably the optical element (1a,1b) consists of precisely two optical components (1a,1b).

10. The lighting device according to one of Claims 1 to 9, **characterised in that** at least one, preferably all optical components (1a, 1b) comprise two or more light-guiding bodies (11, 13, 15;12,14).

11. The lighting device according to one of Claims 1 to 10, **characterised in that** those clamping elements (102c) which, when the retaining body (102) is fastened to the main body (101), come to rest against a light decoupling face (11b-15b) come to rest in a region of the light decoupling face (11b-15b) bordering a transverse web (21,22).

12. The lighting device according to one of Claims 1 to 11, **characterised in that** each ancillary optical system (11, 12, 13, 14, 15) has at least one web (11b', 12b', 13b', 14b', 15b'), which web (11b', 12b', 13b', 14b', 15b') connects the ancillary optical system (11-15) to the at least one assigned connecting web (21, 22), wherein preferably each ancillary optical system has at least one web (11b", 12b", 13b", 14b", 15b"), which web (11b" 12b", 13b", 14b", 15b") is arranged in a region of the light decoupling face (11b, 12b, 13b, 14b, 15b) facing away from the connecting web (21, 22) connecting the ancillary optical system (11-15) to other ancillary optical systems (11-15).

13. The lighting device according to Claim 12, **characterised in that** those clamping elements (102c) which, when the retaining body (102) is fastened to the main body (101), come to rest in a region of one or more light decoupling faces (11b-15b) of the one or more ancillary optical system(s) (11-15) come to rest against a web (11b', 12b', 13b', 14b', 15b', 11b", 12b", 13b", 14b", 15b") extending the light decoupling face (11b-15b) of an ancillary optical system (11-15), wherein preferably the clamping elements (102c) come to rest in a region of the web (11b', 12b', 13b', 14b', 15b', 11b", 12b", 13b", 14b", 15b") facing away from the associated light decoupling face (11b-15b).

14. The lighting device according to Claim 13, **characterised in that** the clamping elements (102c) come to rest against webs (12b", 13b", 14b"), which webs (12b", 13b", 14b") form an open end of the ancillary optical system (12,13,14).

15. The lighting device according to one of Claims 1 to 14, **characterised in that** the fastening device comprises detent elements (102a) and corresponding detect recesses (101a), wherein detent elements (102a) are arranged on the retaining body (102) and/or the main body (101) and corresponding detent recesses (101a) are arranged on the main body (101) and/or the retaining body (102).

16. The lighting device according to one of Claims 1 to 15, **characterised in that** the main body (101) has at least one receptacle (111, 112, 113, 114, 115) for each ancillary optical system (11, 12, 13, 14, 15).

17. The lighting device according to one of Claims 1 to 16, **characterised in that** the receptacles (111, 112, 113, 114, 115) in the installed position form a stop for the ancillary optical systems (11-15) on one side or preferably on both sides and/or upwardly and/or downwardly.

18. A lighting device according to one of Claims 1 to 17 in the form of a motor vehicle headlight for generating a dynamic light distribution.

## Revendications

1. - Dispositif d'éclairage sous forme d'un module d'éclairage pour un phare de véhicule automobile ou sous forme d'un phare de véhicule automobile, lequel dispositif d'éclairage comporte au moins un corps d'optique (1), lequel présente au moins une pluralité d'optiques additionnelles (11, 12, 13, 14, 15) disposées de manière adjacente, dans lequel chaque optique additionnelle (11-15) est formée d'un matériau de guidage de lumière et chaque optique additionnelle (11-15) présente une surface de couplage de lumière (11a-15a) et une surface de découplage de lumière (11b-15b), dans lequel les optiques additionnelles (11-15) sont reliées les unes aux autres mécaniquement dans la région des surfaces de découplage de lumière (11b-15b) par au moins une bande de liaison (21, 22) s'étendant transversalement aux optiques additionnelles (11-15), et dans lequel un dispositif de maintien (100) pour le au moins un corps d'optique (1) est prévu,
**et dans lequel**
le dispositif de maintien (100)
*) comporte un corps de base (101), lequel est apte à être relié à un support (200) pour une ou plusieurs sources de lumière (2) pour l'introduction de lumière dans le corps d'optique (1), dans lequel le corps de base (101) présente au moins un logement (111, 112, 113, 114, 115) pour les optiques additionnelles (11-15), et dans lequel le corps de base (101) présente en outre au moins une région de butée (121, 122), avec laquelle le corps d'optique (1) est apte à être amené en appui par une surface arrière (21', 22') de la au moins une bande de liaison (21, 22) lors d'une introduction des optiques additionnelles (11-15) dans le au moins un logement (111, 112, 113, 114, 115), **caractérisé par le fait que**
la au moins une bande de liaison (21, 22) est optiquement inopérante au moins par endroits, et
le dispositif de maintien (100)
*) présente un corps de retenue (102), lequel est apte à être appliqué sur le corps de base (101) dans la direction d'introduction du corps d'optique (101) après une introduction du corps d'optique (1) dans le corps de base (101),
dans lequel un dispositif de fixation (101a, 102b) est prévu, au moyen duquel le corps de retenue (102) est apte à être fixé au corps de base (101),
et dans lequel
*) le corps de retenue (102) présente au moins une, de préférence exactement une ouverture (102') de telle sorte que de la lumière peut sortir sans entrave des surfaces de découplage de lumière (11b-15b) des optiques additionnelles (11-15), et dans lequel
*) le corps de retenue (102) présente des éléments de serrage (102b), lesquels viennent en appui contre la au moins une bande de liaison (21, 22) sur sa surface côté avant (21", 22") dans un état fixé du corps de retenue (102) au corps de base (101), et dans lequel
*) une ou plusieurs optiques additionnelles (11-15) présentent des bandes (11b", 12b", 13b" , 14b", 15b"), lesquelles prolongent les surfaces de découplage de lumière (11b-15b) de ces optiques additionnelles (11-15), dans lequel
chaque bande (11b", 12b", 13b" , 14b", 15b") est disposée sur une région de la surface de découplage de lumière (11b, 12b, 13b, 14b, 15b) opposée à la bande de liaison (21, 22) reliant l'optique additionnelle (11-15) respective à d'autres optiques additionnelles (11-15), et dans lequel
le corps de retenue (102) présente des éléments de serrage (102c), lesquels viennent en appui contre la bande ou contre ces bandes (11b", 12b", 13b" , 14b", 15b") de la ou des optiques additionnelles (11-15) dans l'état fixé du corps de retenue (102) au corps de base (101),
et les éléments de serrage (102b, 102c) pressent le corps d'optique (1) contre la au moins une région de butée (121, 122) du corps de base (101).

2. - Dispositif d'éclairage selon la revendication 1, **caractérisé par le fait que** les éléments de serrage (102b, 102c) sont formés de manière élastique, en particulier avec une élasticité de ressort.

3. - Dispositif d'éclairage selon l'une des revendications 1 ou 2, **caractérisé par le fait que** la au moins une région de butée (121, 122) et les éléments de serrage (102b) reposent contre des régions de la ou des surfaces (21', 22') côté arrière, respectivement côté avant de la au moins une bande de liaison (21, 22), lesquelles délimitent une région optiquement inopérante de la au moins une bande de liaison (21, 22).

4. - Dispositif d'éclairage selon l'une des revendications 1 à 3, **caractérisé par le fait que** la au moins une bande de liaison totale (21, 22) est optiquement inopérante.

5. - Dispositif d'éclairage selon l'une des revendications 1 à 4, **caractérisé par le fait que** deux bandes de liaison (21, 22) sont prévues, l'une - en position de montage - de préférence dans une région supérieure de l'élément d'optique (1), et l'une, dans une région inférieure de l'élément d'optique (1).

6. - Dispositif d'éclairage selon l'une des revendications 3 à 5, **caractérisé par le fait que** des éléments de serrage (102b), lesquels viennent en appui, à l'état fixé du corps de retenue (102) au corps de base (101), contre la au moins une bande de liaison (21, 22) sur sa surface côté avant (21", 22"), viennent en appui dans au moins une région extérieure par rapport à une étendue longitudinale de la bande de liaison (21, 22), de préférence dans les deux régions extérieures.

7. - Dispositif d'éclairage selon l'une des revendications 5 et 6, **caractérisé par le fait que,** dans le cas de deux bandes de liaison, un élément de serrage (102b) vient en appui contre chaque région extérieure d'une bande de liaison (21, 22).

8. - Dispositif d'éclairage selon l'une des revendications 1 à 7, **caractérisé par le fait que** les surfaces de découplage de lumière (11b-15b) d'optiques additionnelles adjacentes (11-15) présentent une distance a > 0 l'une par rapport à l'autre.

9. - Dispositif d'éclairage selon l'une des revendications 1 à 8, **caractérisé par le fait que** l'élément d'optique (1) est constitué d'au moins deux composants d'optique (1a, 1b) séparés l'un de l'autre, dans lequel chaque composant d'optique (1a, 1b) comporte au moins un corps de guidage de lumière (11, 13, 15 ; 12, 14), dans lequel, de préférence, l'élément d'optique (1a, 1b) est constitué d'exactement deux composants d'optique (1a, 1b).

10. - Dispositif d'éclairage selon l'une des revendications 1 à 9, **caractérisé par le fait qu'**au moins un, de préférence tous les composants d'optique (1a, 1b) comportent au moins deux corps de guidage de lumière (11, 13, 15 ; 12, 14).

11. - Dispositif d'éclairage selon l'une des revendications 1 à 10, **caractérisé par le fait que** les éléments de serrage (102c) qui viennent en appui contre une surface de découplage de lumière (11b-15b) à l'état fixé du corps de retenue (102) au corps de base (101), viennent en appui dans une région de la surface de découplage de lumière (11b-15b) adjacente à une bande transversale (21, 22).

12. - Dispositif d'éclairage selon l'une des revendications 1 à 11, **caractérisé par le fait que** chaque optique additionnelle (11, 12, 13, 14, 15) présente au moins une bande (11b', 12b', 13b', 14b', 15b'), laquelle bande (11b', 12b', 13b', 14b', 15b') relie l'optique additionnelle (11-15) à au moins une bande de liaison (21, 22) associée, dans lequel, de préférence, chaque optique additionnelle présente au moins une bande (11b", 12b'', 13b" , 14b", 15b"), laquelle bande (11b", 12b", 13b" , 14b", 15b") est disposée dans une région de la surface de découplage de lumière (11b, 12b, 13b, 14b, 15b) opposée à la bande de liaison (21, 22) reliant l'optique additionnelle (11-15) à d'autres optiques additionnelles (11-15).

13. - Dispositif d'éclairage selon la revendication 12, **caractérisé par le fait que** les éléments de serrage (102c) qui viennent en appui dans une région d'une ou plusieurs surfaces de découplage de lumière (11b-15b) de la ou des optiques additionnelles (11-15) à l'état fixé du corps de retenue (102) au corps de base (101), viennent en appui contre une bande (11b', 12b', 13b', 14b', 15b', 11b", 12b", 13b" , 14b", 15b") prolongeant la surface de découplage de lumière (11b-15b) d'une optique additionnelle (11-15), dans lequel de préférence, les éléments de serrage (102c) viennent en appui dans une région de la bande (11b', 12b', 13b', 14b', 15b', 11b", 12b", 13b" , 14b", 15b") qui est opposée à la surface de découplage de lumière (11b-15b) associée.

14. - Dispositif d'éclairage selon la revendication 13, **caractérisé par le fait que** les éléments de serrage (102c) viennent en appui contre des bandes (12b", 13b", 14b"), lesquelles bandes (12b", 13b" , 14b") forment une extrémité ouverte de l'optique additionnelle (12, 13, 14).

15. - Dispositif d'éclairage selon l'une des revendications 1 à 14, **caractérisé par le fait que** le dispositif de fixation comprend des éléments d'encliquetage (102a) et des évidements d'encliquetage (101a) correspondants, dans lequel des éléments d'encliquetage (102a) sont disposés sur le corps de retenue (102) et/ou le corps de base (101) et des évidements d'encliquetage correspondants (101a) sont disposés sur le corps de base (101) et/ou le corps de retenue (102).

16. - Dispositif d'éclairage selon l'une des revendications 1 à 15, **caractérisé par le fait que** le corps de base (101) présente pour chaque optique additionnelle (11, 12, 13, 14, 15) au moins un logement (111, 112, 113, 114, 115).

17. - Dispositif d'éclairage selon l'une des revendications 1 à 16, **caractérisé par le fait que** les logements (111, 112, 113, 114, 115) forment en position de montage une butée pour les optiques additionnelles (11-15) sur un ou, de préférence, les deux côtés et/ou vers le haut et/ou vers le bas.

18. - Dispositif d'éclairage selon l'une des revendications 1 à 17 sous forme d'un phare de véhicule automobile pour la production d'une distribution de lumière dynamique.
